# EUROPEAN PATENT APPLICATION

(11) **EP 4 371 872 A1**
(43) Date of publication of application: **22.05.2024**
(21) Application number: 22208197.8
(22) Date of filing: 17.11.2022
(51) Int. Cl.: B64C 9/24, B64C 3/18

(54) **LEADING EDGE DEVICE FOR AN AERODYNAMIC COMPONENT AND METHOD FOR MANUFACTURING A LEADING EDGE DEVICE FOR AN AERODYNAMIC COMPONENT**

(71) Applicant: Airbus Operations GmbH, 21129 Hamburg (DE)
(72) Inventor: Fees, Martin, 21129 Hamburg (DE); Bensmann, Stefan, 21129 Hamburg (DE)
(74) Representative: LKGLOBAL Lorenz & Kopf Patentanwalt Attorney at Law PartG mbB

(57) **Abstract**

The invention relates to leading edge device (10) for an aerodynamic component (100), comprising a skin element (12) defining an aerodynamic profile and being formed of a single-piece structure, wherein the skin element (12) has an inner surface (14) and an outer surface (16). The leading edge device (10) further comprises a support structure (20) having at least one support element (22), wherein the at least one support element (22) is bonded to the inner surface (14) of the skin element (12) via a connecting zone (15) that at least partially extends across the inner surface (14) of the skin element (12). The outer surface (16) of the skin element (12) defines a surface region (17) opposite to the connecting zone (15) where the outer surface (16) is closed. The invention also relates to a method for manufacturing a leading edge (10) device for an aerodynamic component (100).

## Description

### Field of the invention

The invention relates to flow influencing systems for aerodynamic systems. In particular, the invention relates to a leading edge device for an aerodynamic component as well as to a method for manufacturing a leading edge device for an aerodynamic component.

### Technical Background

Leading edge devices such as slats mounted to a wing of an aircraft are commonly known. These slats are usually made of metal and include a plurality of elements which are connected to each other with fasteners. Rivets, bolts and screws are examples for fasteners that are used to attach the slat skin to the underlying stiffening structure. For example, the slat skin may be riveted to spanwise stiffening elements, such as stringers, as well as to chordwise stiffening elements, such as ribs. The usage several fasteners that are used to attach the different components of the slat to each other results in a complex structure. Furthermore, these fasteners may produce imperfections on the outer skin of the slat due to bending radii occurring at the locations of the fasteners. Downstream of these imperfections on the outer surface the airflow usually changes from laminar to turbulent. At least, an imperfection of the outer surface of the skin may facilitate the airflow changing from laminar to turbulent. With respect to leading edge slats, a big contributor for the transition of the airflow are the fasteners for the spanwise connections.

WO 2021/099109 A1 and CN 114728690 A describe a slat arrangement for a wing of an aircraft, the arrangement having a movable leading-edge slat and a connection section, wherein the leading-edge slat comprises a slat leading edge and a slat trailing edge, wherein the connection section comprises a receiving opening for receiving the slat trailing edge, wherein the connection section comprises an overhang having a free end, wherein the slat trailing edge is designed to be translated under the overhang, and wherein a trailing region of the slat is configured to be elastically deformed by the overhang when the slat trailing edge is moved into the receiving opening.

### Summary of the invention

It may be seen as an object of the invention to improve the flow characteristics on aerodynamic structures.

A device and a method according to the features of the independent claims are provided. Further embodiments of the invention are evident from the dependent claims and from the following description.

According to an aspect of the invention, a leading edge device for an aerodynamic component is provided. The leading edge device comprises a skin element defining an aerodynamic profile and being formed of a single-piece structure, wherein the skin element has an inner surface and an outer surface. At the skin element, the outer surface may be oppositely arranged to inner surface, i.e., the skin element may be defined by the inner and outer surface. The leading edge device further comprises a support structure having at least one support element, wherein the at least one support element is bonded to the inner surface of the skin element via a connecting zone that at least partially extends across the inner surface of the skin element. The outer surface of the skin element defines a surface region opposite to the connecting zone where the outer surface is closed, e.g., where the outer surface has no holes or bores in which attachment elements or fasteners like rivets can be placed.

The inventive leading edge device may be a slat component or a slat device for an aerodynamic structure, for example a wing of an aircraft. In particular, the leading edge device may be a slat of an aircraft wing. With the inventive leading edge device, it is possible to improve aerodynamic characteristics since the leading edge device includes less imperfections and irregularities on its outer surface than conventional leading edge devices or slat devices. This advantage can be achieved by reducing or eliminating the usage of fasteners or attachment elements which might at least partially be present on the outer skin surface of the leading edge device.

Fasteners or attachment elements are commonly used to attach the skin element of the leading edge device to its inner stiffening elements. However, if such fasteners or attachment elements pass through the outer skin surface of the skin element of the leading edge device, an imperfection on the outer surface of the skin element occurs which may have adverse impacts on the flow behavior over said outer surface.

The inventive leading edge device avoids the presence or at least reduces the number of fasteners or attachment elements on the outer surface. As a result, the natural laminar flow over the surface is promoted due to the reduction or full removement of imperfections on the outer skin. This means that a possible laminar to turbulent transition of the flow may be shifted further downstream. In other words, the flow over the outer surface of the skin element remains laminar for a longer distance and a turbulent flow occurs, if at all, at a more downstream part of the leading edge device. This in turn leads to a drag reduction and/or improvements in the high-lift characteristics of the whole leading edge device.

By attaching the inner support structure of the leading edge device to the inner surface of the skin element using various bonding techniques as described herein, the imperfections on the outer surface can be reduced or fully removed. In particular, no through holes may be required in the skin element to attach the skin element to its inner support structure. In addition, the single-piece structure of the skin element avoids the presence of any gaps and steps between different parts of the skin element, for example gaps between an aft end of the leading edge device and a front end of the leading edge device.

The leading edge device comprises the skin element which may be manufactured of a form material, e.g., reinforced thermoplastic, thermoset or stretched form metal. The support structure may comprise Z-shaped parts as support elements. These support elements are manufactured, e.g., formed or extruded, separately. After manufacturing, the skin element and the parts of the support structure, e.g., the support elements, may be bonded together without any separate fasteners or attachment elements. The support elements together with the skin element may form a trailing edge box of the leading edge device. The trailing edge box is integrated within the leading edge device such that it is covered by the single-piece skin element 12 that extends over the entire leading edge device as one piece. Thus, a leading edge device can be provided at which no gaps and steps in the skin element are present.

When using reinforced thermoplastics as a material for the skin element and for the support element, a flange of the support element and the inner surface of the skin element can be heated locally such that, afterwards, a pressing of the flange of the support element against the inner contact surface of the skin element bonds together both components without the need of any additional fasteners. In this manner, the outer surface remains closed at least in the particular surface region of the outer surface which lies opposite to said connecting zone where the support element is bonded to the inner surface of the skin element.

When using metal as a material for the skin element and the support element, a metallic bonding process, for example welding or soldering, can be used for bonding the support element to the inner surface of the skin element in the connecting zone. Again, the outer surface remains closed at least in the particular surface region of the outer surface which lies opposite to said connecting zone where the support element is bonded to the inner surface of the skin element.

The support elements may be spanwise or chordwise stiffening elements for stiffening the skin element since the skin element may be subjected to extensive aerodynamic or mechanical loads during operation of the leading edge device. For example, the support element is a stringer, a rib or a spar that extends in an inner space of the leading edge device, which space is at least partly surrounded or enclosed by the skin element.

The term "bonded" in present context can be understood as that no additional fasteners or attachment elements are used to connect the support element to the inner surface of the skin element. For example, a bonding in present context may include an adhesive bonding where the two components are adhered to each other using an adhesive between the two components. A bonding in present context may alternatively or additionally include a material bonding where the connection between the two components is achieved by a merging or interfusion of the materials of both components in the connecting zone. The material bonding may for instance be achieved by welding, soldering or just heating the two components.

As explained above, the leading edge device further comprises a support structure with the at least one support element, wherein the at least one support element is bonded to the inner surface of the skin element via the connecting zone that at least partially extends across the inner surface of the skin element. This means that the connecting zone may be defined by the surface portion of the inner surface where the support element contacts the inner skin of the skin element after being bonded together.

The outer surface of the skin element then defines a surface region opposite to the connecting zone. This means that the surface region may only be the particular surface portion of the outer surface that lies opposite to the connecting zone, with respect to the skin element. In at least this surface region of the outer surface the outer surface is closed.

The term "closed" in the present context may be understood as that the outer surface in said region has no holes, cavities, or bores that extend into the skin element. In other words, a "closed" outer surface might have no imperfections or irregularities and may rather have a continuous surface with a continuous extension or continuous curvature. This will be explained in more detail with respect to the description of the Figures below.

According to an embodiment, the leading edge device is configured to be movably coupled to a wing structure of an aircraft.

This means that the leading edge device as a whole may be movably coupled to the wing structure. In other words, the leading edge device may be a slat or slat component movably attached to the wing structure and thus represents the movable component with respect to the aircraft wing.

According to an embodiment, the outer surface of the skin element is an entirely closed surface.

For example, the complete outer surface has no holes, cavities, bores or indentations in which fasteners or the like are inserted. The complete outer surface may thus have a continuous surface with a continuous extension or continuous curvature. The entire inner support structure which may include several support elements can thus be bonded to the inner surface of the skin element without using any additional fasteners like rivets, bolts or screws. In this manner, it can also be avoided to affect the structural integrity of the skin element since no holes or bores are required to be drilled or punched through the skin element. Merely the inner surface gets covered by the support elements in the connecting zones, i.e., at the inner surface portions where the support elements are bonded to the inner surface.

According to an embodiment, the skin element is an integrally formed curved structure.

The skin element, in its cross section, may comprise an aerodynamic shape, for example an airfoil-like shape or at least the shape of a part of an airfoil. In operation, a fluid flow, for example a gas or a liquid, may flow over the curved outer surface of the skin element. In a preferred embodiment, the leading edge device is a slat of an aircraft and an air flow will flow over the curved outer surface of the skin element during operation of the leading edge device.

According to an embodiment, the skin element comprises a reinforced thermoplastic material, and/or the skin element comprises a thermoset material, and/or the skin element comprises a metallic material.

The skin element may comprise a fiber-reinforced plastics, for example carbon fiber reinforced plastics (CFRP). However, the skin element may alternatively comprise an aluminum alloy. The skin element may alternatively comprise a thermoset (duroplast) material, also referred to as thermosetting polymer, which is a polymer that is produced by hardening a soft solid or viscous liquid prepolymer resin. A combination of such materials is also possible.

According to an embodiment, the at least one support element comprises a reinforced thermoplastic material, and/or the at least one support element comprises a thermoset material, and/or the at least one support element comprises a metallic material.

The support element may comprise a fiber-reinforced plastics, for example carbon fiber reinforced plastics (CFRP). However, the support element may alternatively comprise an aluminum alloy. The support element may alternatively comprise a thermoset (duroplast) material. A combination of such materials is also possible.

According to an embodiment, the skin element and the at least one support element are made of the same material.

This may facilitate the manufacturing of the leading edge device, in particular when bonding the support element to the inner surface of the skin element. For example, if thermoplastics are used for both the skin element and the support element, then the bonding may be achieved by locally heating the support element in the area where it is to be connected to the inner surface as well as locally heating the area of the inner surface of the skin element where it is to be connected to the support element, and further by pressing both components together such that their material merges or interfuses in order to provide a material bond between them. If metal is used for the skin element and for the support element, then metal bonding processes like welding can be used to provide the bond between these elements.

According to an embodiment, the at least one support element is bonded to the inner surface of the skin element by an adhesive bond or by a material bond.

An adhesive bond may include the application of an additional adhesive between the support element and the inner surface of the skin element in the connecting zone. A material bond may eliminate the need to provide further materials for creating the bond between the support element and the inner surface of the skin element. Rather, a material bond can be generated by using only the materials of the support element and the skin element, for example by heating the respective connecting areas of the two elements and then pressing them together.

It may be understood that an adhesive bond as well as a material bond may create a non-detachable or non-releasable connection or coupling between the inner surface of the skin element and the support element. In other words, an adhesive bond as well as a material bond may create a permanent connection or coupling between the inner surface of the skin element and the support element.

According to an embodiment, the skin element comprises an end, for example an aft end, where the inner surface and the outer surface taper towards each other.

The tapering may be configured such that the inner surface and the outer surface taper towards each other to form a tip at the end of the skin element. At this tip, the inner surface and the outer surface may enclose an acute angle. The tip may represent the most rear part of the leading edge device where the leading edge device adjoins, abuts or lies adjacent to the neighboring aerodynamic component, for example the wing structure of an aircraft.

According to an embodiment, the aerodynamic profile of the skin element defines a chordwise direction and a spanwise direction which preferably is perpendicular to the chordwise direction, wherein a first connecting zone via which the at least one support element is bonded to the inner surface of the skin element substantially extends in the chordwise direction or in the spanwise direction.

For example, the support element may be a spanwise stiffening element, e.g., a stringer, which is bonded over its length onto the inner surface of the skin element. In this case, the first connecting zone that represents the inner surface portion or inner surface area where the support element is bonded to the inner surface of the skin element extends in the spanwise direction, i.e., along the length of the stringer.

Additionally or alternatively, the support element may be a chordwise stiffening element, e.g., a rib or spar, which is bonded over its length onto the inner surface of the skin element. In this case, the first connecting zone that represents the inner surface portion or inner surface area where the support element is bonded to the inner surface of the skin element extends in the chordwise direction, i.e., along the length of the rib or spar.

According to an embodiment, the support structure has a plurality of support elements, wherein each of the plurality of support elements is bonded to the inner surface of the skin element via respective connecting zones that at least partially extend across the inner surface of the skin element, wherein the outer surface of the skin element defines a plurality of surface regions, each of which is opposite to one of the respective connecting zones, and wherein, in the surface regions, the outer surface is closed.

As explained above, the support structure may comprise a plurality of support elements like stringers, spars and/or ribs, for stiffening the skin element of the leading edge device. All of these support elements may be bonded to the inner surface of the skin element in the same manner as described for the one support element above. This leads to the presence of several connecting zones, e.g., bonding zones, on the inner surface of the skin element. The connecting zones may thus form a specific pattern on the inner surface of the skin element which will be described in more detail in the description of the Figures below. It is noted that, opposite to all of these connecting zones, there is a corresponding surface region on the outer surface where the outer surface is closed and thus has no imperfections.

According to an embodiment, a first support element of the plurality of support elements is a spanwise stiffening element which extends in a spanwise direction of the aerodynamic profile of the skin element. Additionally or alternatively, a second support element of the plurality of support elements is a chordwise stiffening element which extends in a chordwise direction of the aerodynamic profile of the skin element.

The spanwise stiffening element may be a stringer and the chordwise stiffening element may be a spar or rib of the support structure. It is noted that a plurality of such stiffening elements may be present in the leading edge device. However, the bonding of all these stiffening elements to the inner surface of the skin element may, for the inventive leading edge device, not require any fasteners or attachment elements that might influence the outer surface of the skin element, such that the entire outer surface of the skin element may be closed. In other words, the entire outer surface may be free of holes, cavities, indentations, bending areas, protrusions, fasteners or other attachment elements. In particular, the entire outer surface may be smooth and even, except a possible curvature or curved contour that is due to the aerodynamic profile, e.g., airfoil, of the skin element.

According to an aspect, an aircraft comprising the leading edge device as described herein is provided. The aircraft may be a transport or passenger aircraft.

According to another aspect, a use of the leading edge device described herein as a leading-edge slat of an aircraft wing is provided.

According to another aspect, a method for manufacturing a leading edge device for an aerodynamic component is provided. In one step, the method comprises manufacturing a skin element as a single-piece structure, the skin element having an inner surface and an outer surface. In another step, the method comprises manufacturing a support structure having at least one support element. In another step, the method comprises bonding the at least one support element to the inner surface of the skin element via a connecting zone that at least partially extends across the inner surface of the skin element, wherein bonding the at least one support element to the inner surface of the skin element includes bonding the at least one support element to the inner surface of the skin element such that, at least in a surface region of the outer surface that is opposite to the connecting zone, the outer surface remains closed.

The steps of the inventive method may be performed in the indicated order. However, another order may be possible.

### Brief description of the drawings

The present invention will hereinafter be described in conjunction with the following drawing figures, wherein like numerals denote like elements, and wherein:
- Fig. 1: shows a cross-sectional view of a leading edge device according to an exemplary embodiment.
- Fig. 2: shows a detailed cross-sectional view of an aft end of a leading edge device, according to an exemplary embodiment.
- Fig. 3: shows a perspective view of a leading edge device without skin element, according to an exemplary embodiment.
- Fig. 4: shows a perspective view of a leading edge device, indicating connecting zones for bonding a support structure to a skin element of the leading edge device, according to an exemplary embodiment.
- Fig. 5: shows a cross-sectional view of a leading edge device according to another exemplary embodiment.
- Fig. 6: shows a cross-sectional view of a leading edge device according to another exemplary embodiment.
- Fig. 7: shows a cross-sectional view of a leading edge device according to another exemplary embodiment.
- Fig. 8: shows the cross-sectional view A-A of Fig. 7, according to an exemplary embodiment.
- Fig. 9: shows the cross-sectional view A-A of Fig. 7, according to another exemplary embodiment.
- Fig. 10: shows a cross-sectional view of a leading edge device according to another exemplary embodiment.
- Fig. 11: shows a cross-sectional view of a leading edge device according to another exemplary embodiment.
- Fig. 12: shows an aircraft comprising a leading edge device according to an exemplary embodiment.
- Fig. 13: shows a method for manufacturing a leading edge device according to an exemplary embodiment.

### Detailed description of exemplary embodiments

The representations and illustrations in the drawings are schematic and not to scale. A better understanding of the device and method described above may be obtained through a review of the illustrations accompanying this application together with a review of the detailed description that follows.

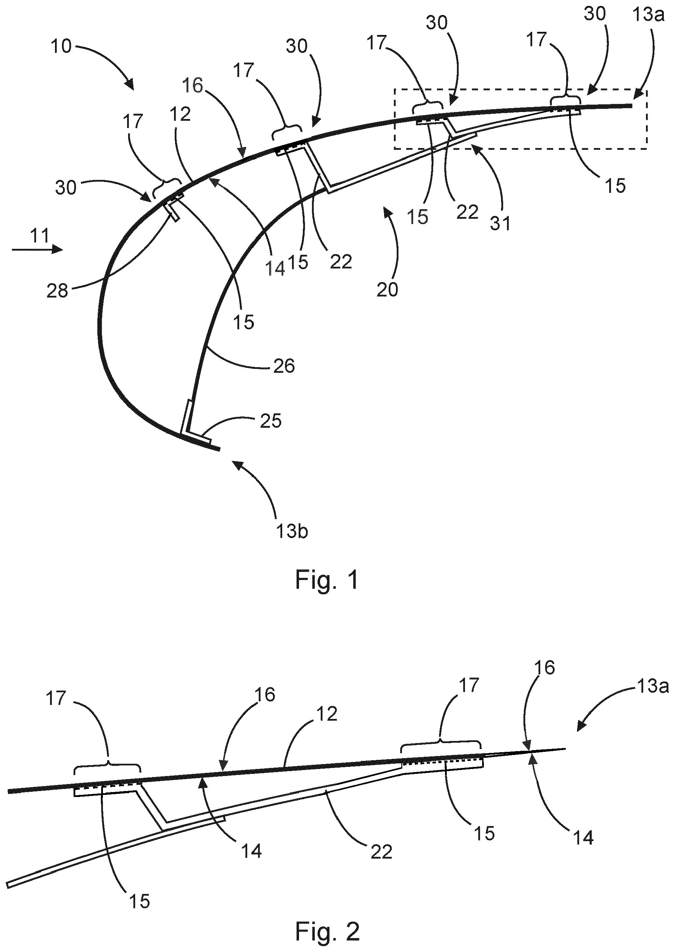

Fig. 1 shows a cross-sectional view of a leading edge device 10. The leading edge device 10 comprises a skin element 12 defining an aerodynamic profile, for example an airfoil profile or at least a part of an airfoil profile. The skin element 12 is formed of a single-piece structure. For example, the skin element 12 is a unitary and/or integral structure which is manufactured as one single piece. The skin element 12 has an inner surface 14 and an outer surface 16. The outer surface 16 may represent a boundary surface 16 that is subjected to an airflow (indicated by arrow 11) during operation of the leading edge device 10. For example, the airflow may move along the outer surface 16 during operation of the leading edge device 10. The leading edge device 10 further comprises a support structure 20 having at least one support element 22. The support structure 20 may be at least partly enclosed by the skin element 12 as shown in Fig. 1, wherein the inner surface 14 of the skin element 12 faces the support structure 20. The at least one support element 22 is bonded to the inner surface 14 of the skin element 12 via a connecting zone 15 (indicated by a dashed line in Fig. 1) that at least partially extends across the inner surface 14 of the skin element 12. The outer surface 16 of the skin element 12 defines a surface region 17 (herein also referred to as surface portion of the outer surface) opposite to the connecting zone 15 where the outer surface 16 is closed. In particular, the surface region 17 may only cover the particular part of the outer surface 16 which lies directly opposite to the connecting region 15 of the inner surface 14. The connecting zone 15 may be defined by the bonding area which only covers the surface portion of the inner surface 14 where the at least support element 22 is connected to the inner surface 14.

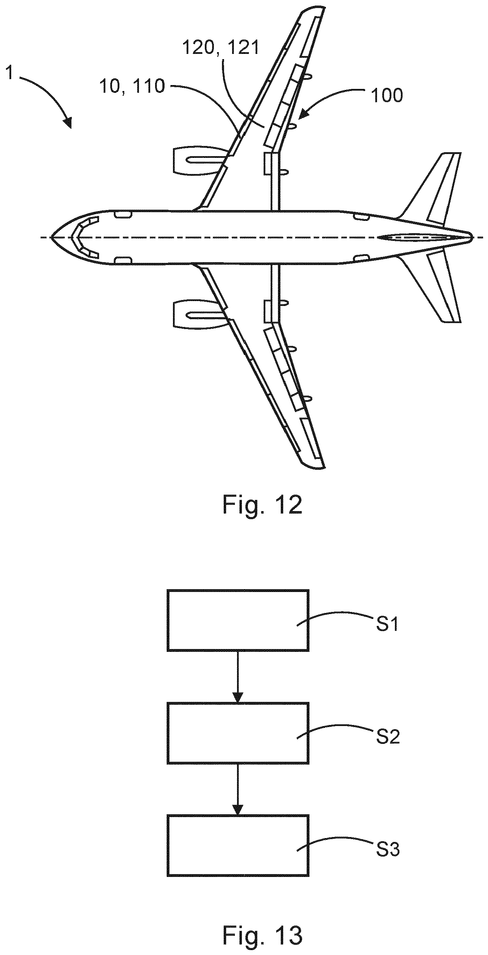

The leading edge device 10 may be in the form of a slat device 110 which is configured to be movably coupled to a wing structure 121 of an aircraft 1 as shown in Fig. 12. That is, the leading edge device 10 may represent the complete movable part coupled at the leading edge of an aircraft wing.

As indicated above, the outer surface 16 is closed in the surface region 17 which represents the area on the outer surface that is directly opposite to the connecting zone 15, i.e., the boding area between the support element 22 and the skin element 12. In the example shown in Fig 1, the outer surface 16 of the skin element 12 is an entirely closed surface. This means that the outer surface 16 is not only closed in the surface region 17, but also along the entire extension of the outer surface 16 and thus along the entire extension of the skin element 12. This configuration avoids any disturbances or imperfections on the outer surface 16, which positively influences the flow conditions on the outer surface 16. In this manner, the laminar to turbulent transition of the flow across the outer surface 16 of the skin element 12 can be shifted downstream closer to the aft end 13a of the skin element 12 which also is the aft end 13a of the entire leading edge device 10.

As can also be seen in Fig. 1, the skin element 12 represents an integrally formed curved structure. In particular, the skin element 12 may have different curvatures along its length from the front end 13b of the skin element 12 to the aft end 13a of the skin element 12. At the front end 13b, the skin element 12 may have a larger curvature, wherein, when extending towards the aft end 13a, the curvature of the skin element 12 becomes smaller. However, the outer surface 16 of the skin element 12 may be a continuous and/or smooth surface, i.e., without any indentations or protrusions thereon.

The at least one support element 22 is bonded to the inner surface 14 of the skin element 12 by an adhesive bond 30 or by a material bond 30. This bond 30 extends along the connecting zone 15. However, the bond 30 may be configured such that, during the creation of the bond 30, if at all, only the inner surface 14 of the skin element 12 experiences a modification in its geometry or material characteristics. The outer surface 16 may remain completely unmodified during the creation of the bond 30.

As can further be derived from Fig. 1, the support structure 20 comprises a plurality of support elements 22. In the illustrated configuration, the support elements 22 may be substantially shaped as Z-support elements 22, i.e., as support elements 22 in the form of a Z. Each of the Z-support elements 22 is bonded to the inner surface 14 of the skin element 12 via respective connecting zones 15 (indicated by dashed lines). A further support element 28, for example a stringer, may also bonded to the inner surface 14 of the skin element 12 via a respective connecting zone 15 (indicated by a dashed line). Further support members 25, 26 close the inner support structure 20 as shown in Fig. 1.

The support member 25 may represent a so-called "girder". The support member 26 may form a back skin of the leading edge device 10.

It is noted that both Z-support elements 22 may be arranged closer to the aft end 13a of the leading edge device 10 and may thus be referred to as trailing edge support elements 22 since these Z-support elements 22 are located at the trailing edge of the leading edge device 10. An attachment 31 may be provided between these Z-support elements 22, wherein this attachment 31 may be similar to the bond 30, e.g., an adhesive bond or a material bond, or the attachment 31 may alternatively comprise fasteners like rivets, bolts, screws, etc. The Z-support elements 22 (herein also referred to as "Z-shaped parts") together with the skin element 12 form a trailing edge box of the leading edge device 10. The trailing edge box is integrated within the leading edge device 10 such that it is also covered by the single-piece skin element 12 that extends over the entire leading edge device 10 as one piece. Thus, a leading edge device 10 can be provided at which no gaps in the skin element 12 are present. In order to further enhance the stiffness, several additional Z-support elements can be added for spanwise stiffness or several riblets or ribs can be added for chordwise stiffness or both.

Each or some of the plurality of support elements 22, 25, 28 may be bonded to the inner surface 14 of the skin element 12 via respective connecting zones 15 that at least partially extend across the inner surface 14 of the skin element 12, wherein the outer surface 16 of the skin element 12 defines a plurality of surface regions 17, each of which is opposite to one of the respective connecting zones 15 and wherein, in these surface regions 17, the outer surface 12 is closed.

Fig. 2 shows a detailed cross-sectional view of the aft end 13a of the leading edge device 10. As can be seen from this Figure, the inner surface 14 and the outer surface 16 of the skin element 12 taper towards each other at the aft end 13a. This tapering may be configured such that the inner surface 14 and the outer surface 16, in their cross-section, define an acute angle at the aft end 13a. The aft end 13a may thus be formed by a tip at the trailing edge section of the leading edge device 10. Such a configuration of the aft end 13a may provide an improved transition between the trailing edge section of the leading edge device 10 and the wing structure 121 to which the leading edge device 10 may be coupled (cf. Fig. 12).

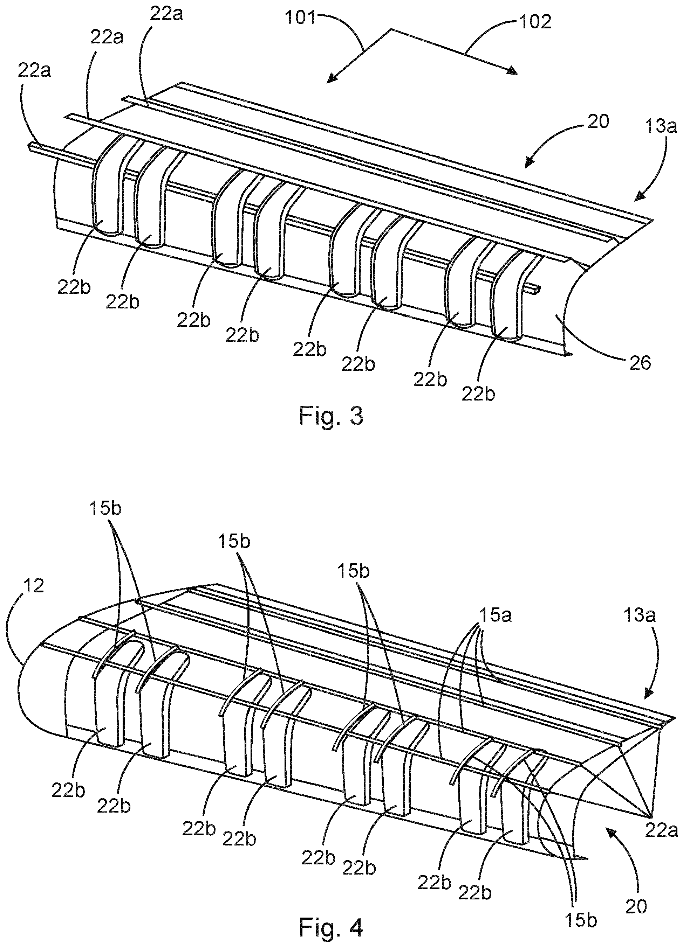

Fig. 3 shows a perspective view of the leading edge device 10, wherein the skin element 12 is removed to provide a better understanding of the arrangement of the support structure 20 inside the leading edge device 10. As can be seen in Fig. 3, the support structure 20 comprises several first support elements 22a, wherein each of the first support elements 22a is in the form of a spanwise stiffening element 22a, for example a stringer, which extends in a spanwise direction 102 of the aerodynamic profile of the skin element 12. This spanwise direction 102 may be substantially parallel to a main extension direction of an aircraft wing to which the leading edge device 10 may be coupled.

Furthermore, the support structure 20 comprises several second support elements 22b, wherein each of the second support elements 22b is a chordwise stiffening element 22b, for example a rib or a spar, which extends in a chordwise direction 101 of the aerodynamic profile of the skin element 12. The chordwise direction 101 may be substantially or exactly perpendicular to the spanwise direction 102.

Fig. 4 shows a perspective view of the leading edge device 10, indicating multiple connecting zones 15 for bonding a support structure 20 to a skin element 12 of the leading edge device 10. The connecting zones 15 form a specified pattern on the inner surface 14 of the skin element 12, which is dependent on the specific arrangement of the plurality of first support elements 22a and the plurality of second support elements 22b. In Fig. 4, it is derivable that the plurality of first support elements 22a is bonded to the inner surface 14 via a plurality of first connecting zones 15a and that the plurality of second support elements 22b is bonded to the inner surface 14 via a plurality of second connecting zones 15b.

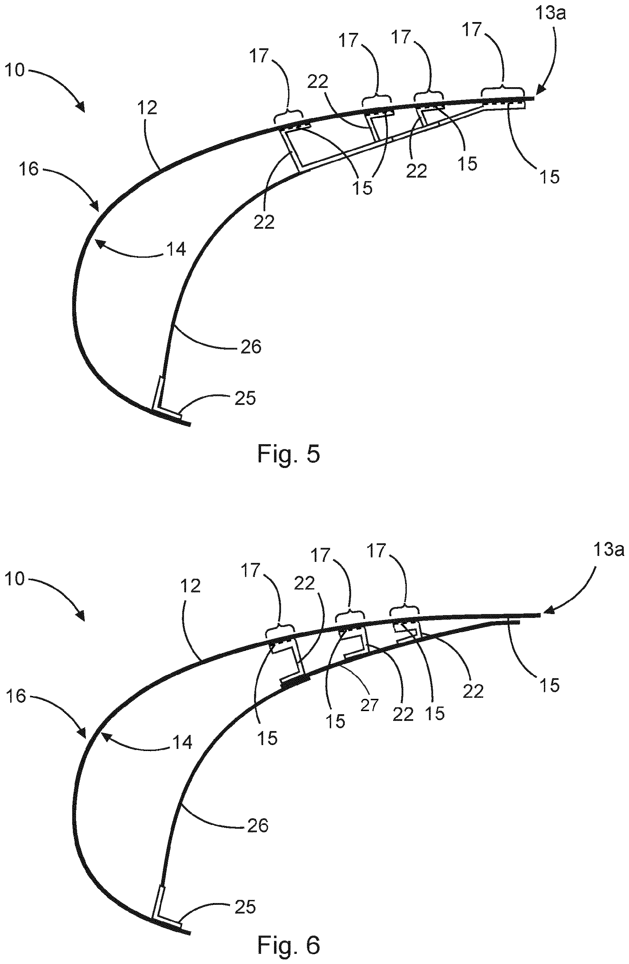

Fig. 5 shows a cross-sectional view of a leading edge device 10. Basically, the leading edge device 10 as shown in Fig. 5 resembles the leading edge device 10 as shown in Fig. 1, except the shape of the support elements 22, which appear in the form of hook-like elements in the example of Fig. 5. In particular, three support elements 22 are arranged next to one another in the trailing edge section of the leading edge device 10. These three support elements 22 may be connected to each other via first flanges and connected to the inner surface 14 of the skin element 12 via second flanges. In this case, the second flanges are bonded to the inner surface 14 via the connecting zones 15 as described above.

Fig. 6 shows a further cross-sectional view of a leading edge device 10. Basically, the leading edge device 10 as shown in Fig. 6 resembles the leading edge device 10 as shown in Fig. 1, except the shape of the support elements 22, which appear in the form of U-shaped elements in the example of Fig. 6. In particular, three support elements 22 are arranged in juxtaposition near the trailing edge section of the leading edge device 10. These three support elements 22 may be connected to each other via a support member 27 and connected to the inner surface 14 of the skin element 12 via respective flanges. In this case, the flanges of the three support elements 22 are bonded to the inner surface 14 via respective connecting zones 15 as described above.

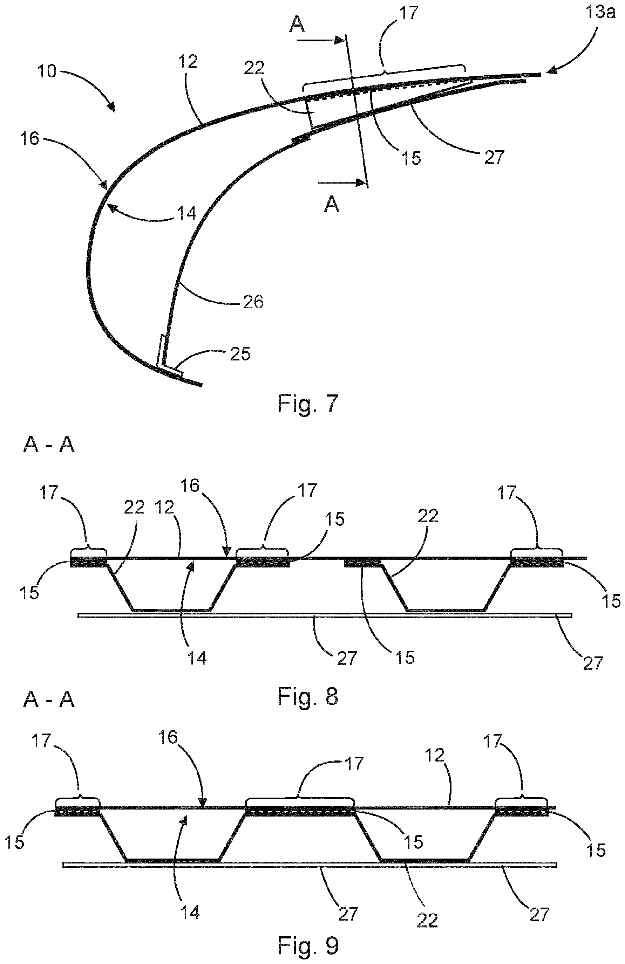

Fig. 7 shows a cross-sectional view of a leading edge device 10. Basically, the leading edge device 10 as shown in Fig. 7 resembles the leading edge device 10 as shown in Fig. 1. However, in the example of Fig. 7 only one support element 22 is arranged at the trailing edge section of the leading edge device 10. This support element 22 appears generally in the form of a triangle in the cross-sectional view. The support element 22 may be a thin-walled hollow component that is adapted to stiffen skin element 12 of the leading edge device 10. The support element 22 may be bonded to the inner surface 14 of the skin element 12 via a connecting zone 15 as described above. In addition, the support element 22 may be attached, e.g., bonded or riveted, to the support member 27 that represents a separate back skin panel which itself is attached or bonded to the inner surface 14 near the aft end 13a and also to the support member 26. As illustrated, the support element 22 lies between the support member 27 and the skin element 12.

Fig. 8 shows the cross-sectional view A-A of Fig. 7, i.e., a cross-section through the support element 22, the support member 27 and the skin element 122. As can be seen in Fig. 8, the support element 22 may be present in the form of separate omega-shaped stiffening elements 22 (herein also referred to as "separate omegas"), wherein each flange of the omega-shaped stiffening elements 22 is bonded via a respective connecting zone 15 to the inner surface 14 of the sin element 12. Each central portion of the omega-shaped stiffening elements 22 is attached, e.g., bonded or riveted, to the support member 27. The outer surface regions 17 where the outer surface 16 is closed lie again opposite to the connecting zones 15 on the inner surface 14.

Fig. 9 shows the cross-sectional view A-A of Fig. 7, i.e., a cross-section through the support element 22, the support member 27 and the skin element 122. As can be seen in Fig. 9, the support element 22 may be present in the form of connected omega-shaped stiffening elements 22 (herein also referred to as "continuous omegas"), i.e., in the form of a corrugated sheet that extends along the aft end 13a of the skin element 12. First portions of the corrugated sheet elements 22 are bonded via connecting zones 15 to the inner surface 14 of the sin element 12. Second portions of the corrugated sheet elements 22 that interchangeably lie between the first portions of the corrugated sheet elements 22 are attached, e.g., bonded or riveted, to the support member 27. The outer surface regions 17 where the outer surface 16 is closed lie again opposite to the connecting zones 15 on the inner surface 14.

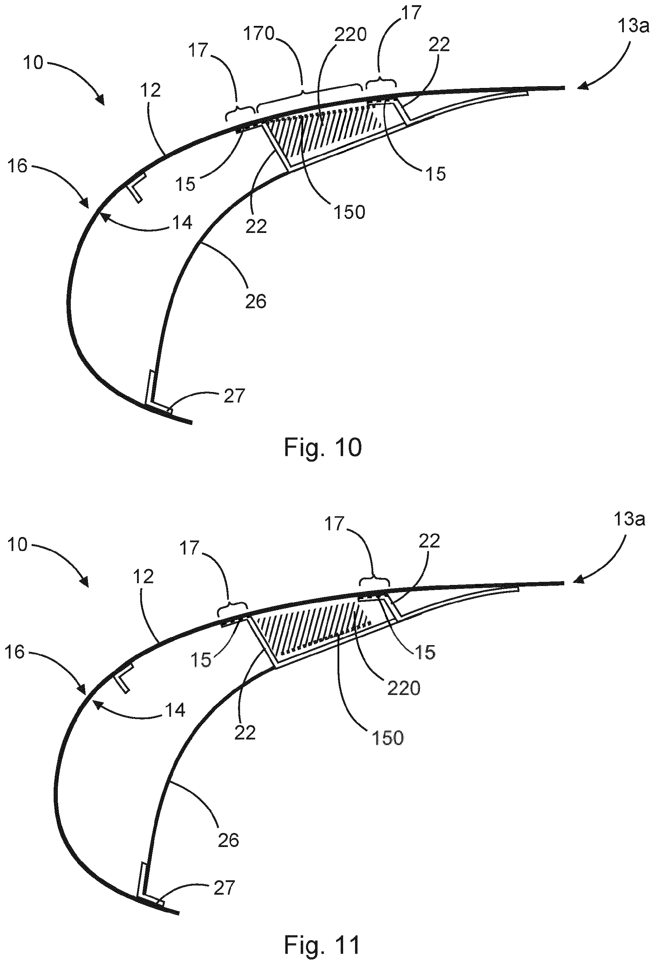

Fig. 10 shows a cross-sectional view of the leading edge device 10 of Fig. 1 which additionally comprises a chordwise stiffening element 220 which is bonded to the inner surface 14 via the connecting zone 150. The chordwise stiffening element 220 is arranged between the two Z-shaped support elements 22 of the leading edge device 10. Again, a surface region 170 of the outer surface 16 directly lies opposite to the connecting zone 150. At least in this surface region 170 the outer surface 16 is closed, i.e., does not contain any irregularities or imperfections on the surface due to holes, bores or fasteners protruding out of the skin element 12, etc. The chordwise stiffening element 220 may comprise an L-shape, a C-shape or a T-shape in its cross-section.

Fig. 11 shows a cross-sectional view of the leading edge device 10 of Fig. 1 which additionally comprises a chordwise stiffening element 220 which is bonded or attached, e.g., riveted, to one of the Z-shaped support elements 22 via the connecting zone 150. There might be no connection, e.g., no contact, between the chordwise stiffening element 220 and the inner surface 14. The chordwise stiffening element 220 is arranged between the two Z-shaped support elements 22 of the leading edge device 10. The chordwise stiffening element 220 may comprise an L-shape, a C-shape or a T-shape in its cross-section.

Fig. 12 shows an aircraft 1 comprising a leading edge device 10, for example the leading edge device 10 of Fig. 1. The leading edge device 10 is used as a leading-edge slat 110 of an aircraft wing 120. Therefore, the leading edge device 10 is coupled to a wing structure 121 of the aircraft wing 120 by a drive mechanism (not shown), which drive mechanism is configured to extend or retract the leading edge device 10 with respect to the aircraft wing 120.

With the leading edge device 10, the transition between laminar and turbulent flow can be shifted aft, i.e., further downstream and closer to the aft end of the leading edge device 10. In a preferred example, the transition from laminar to turbulent flow can be shifted up to the tip at the aft end 13a of the leading edge device 10 (cf. Fig. 2) where a small step or gap between the trailing edge of the leading edge device 10 and the wing's fixed leading edge is present. With the shift aft of the transition from laminar to turbulent flow, the overall aerodynamic drag can be reduced.

Fig. 13 shows a method for manufacturing a leading edge 10 device for an aerodynamic component 100. In a step S1 of the method, a skin element 12 is manufactured as a single-piece structure, the skin element 12 having an inner surface 14 and an outer surface 16. For example, the skin element 12 is formed into its final shape and edges of the skin element 12 are trimmed. In a step S2 of the method, a support structure 20 having at least one support element 22 is manufactured. For example, the support element 22 is formed into a Z-shaped part. In a step S3 of the method, the at least one support element 22 is bonded to the inner surface 14 of the skin element 12 via a connecting zone 15 that at least partially extends across the inner surface 14 of the skin element 12, wherein bonding the at least one support element 22 to the inner surface 14 of the skin element 12 includes bonding the at least one support element 22 to the inner surface 14 of the skin element 12 such that, in a surface region 17 of the outer surface 16 that is opposite to the connecting zone 15, the outer surface 16 remains closed.

## Claims

1. Leading edge device (10) for an aerodynamic component (100), comprising:
a skin element (12) defining an aerodynamic profile and being formed of a single-piece structure;
wherein the skin element (12) has an inner surface (14) and an outer surface (16);
a support structure (20) having at least one support element (22);
wherein the at least one support element (22) is bonded to the inner surface (14) of the skin element (12) via a connecting zone (15) that at least partially extends across the inner surface (14) of the skin element (12);
wherein the outer surface (16) of the skin element (12) defines a surface region (17) opposite to the connecting zone (15) where the outer surface (16) is closed.

2. Leading edge device (10) of claim 1,
wherein the leading edge device (10) is configured to be movably coupled to a wing structure (121) of an aircraft (1).

3. Leading edge device (10) according to any one of the preceding claims,
wherein the outer surface (16) of the skin element (12) is an entirely closed surface.

4. Leading edge device (10) according to any one of the preceding claims,
wherein the skin element (12) is an integrally formed curved structure.

5. Leading edge device (10) according to any one of the preceding claims,
wherein the skin element (12) comprises a reinforced thermoplastic material; and/or
wherein the skin element (12) comprises a thermoset material; and/or
wherein the skin element (12) comprises a metallic material.

6. Leading edge device (10) according to any one of the preceding claims,
wherein the at least one support element (22) comprises a reinforced thermoplastic material; and/or
wherein the at least one support element (22) comprises a thermoset material; and/or
wherein the at least one support element (22) comprises a metallic material.

7. Leading edge device (10) according to any one of the preceding claims,
wherein the skin element (12) and the at least one support element (22) are made of the same material.

8. Leading edge device (10) according to any one of the preceding claims,
wherein the at least one support element (22) is bonded to the inner surface (14) of the skin element (12) by an adhesive bond (30) or by a material bond (30).

9. Leading edge device (10) according to any one of the preceding claims,
wherein the skin element (12) comprises an end (13a) where the inner surface (14) and the outer surface (16) taper towards each other.

10. Leading edge device (10) according to any one of the preceding claims,
wherein the aerodynamic profile of the skin element (12) defines a chordwise direction (101) and a spanwise direction (102) which is substantially perpendicular to the chordwise direction (101);
wherein a first connecting zone (15) via which the at least one support element (22) is bonded to the inner surface (14) of the skin element (12) substantially extends in the chordwise direction (101) or in the spanwise direction (102).

11. Leading edge device (10) according to any one of the preceding claims,
wherein the support structure (20) has a plurality of support elements (22a, 22b);
wherein each of the plurality of support elements (22a, 22b) is bonded to the inner surface (14) of the skin element (12) via respective connecting zones (15a, 15b) that at least partially extend across the inner surface (14) of the skin element (12);
wherein the outer surface (16) of the skin element (12) defines a plurality of surface regions (17), each of which is opposite to one of the respective connecting zones (15a, 15b);
wherein, in the surface regions (17), the outer surface (12) is closed.

12. Leading edge device (10) according to claim 11,
wherein a first support element (22a) of the plurality of support elements (22) is a spanwise stiffening element (22a) which extends in a spanwise direction (102) of the aerodynamic profile of the skin element (12); and/or
wherein a second support element (22b) of the plurality of support elements (22) is a chordwise stiffening element (22b) which extends in a chordwise direction (101) of the aerodynamic profile of the skin element (12).

13. Aircraft (1) comprising a leading edge device (10) according to any one of the preceding claims.

14. Use of a leading edge device (10) according to any one of claims 1 to 12 as a leading-edge slat (110) of an aircraft wing (120).

15. Method for manufacturing a leading edge device (10) for an aerodynamic component (100), comprising:
manufacturing a skin element (12) as a single-piece structure, the skin element (12) having an inner surface (14) and an outer surface (16, S1);
manufacturing a support structure (20) having at least one support element (22, S2);
bonding the at least one support element (22) to the inner surface (14) of the skin element (12) via a connecting zone (15) that at least partially extends across the inner surface (14) of the skin element (12), wherein bonding the at least one support element (22) to the inner surface (14) of the skin element (12) includes bonding the at least one support element (22) to the inner surface (14) of the skin element (12) such that, in a surface region (17) of the outer surface (16) that is opposite to the connecting zone (15), the outer surface (16) remains closed (S3).

## Amended claims

### Amended claims in accordance with Rule 137(2) EPC.

1. Leading edge device (10) for an aerodynamic component (100), comprising:
a skin element (12) defining an aerodynamic profile and being formed of a single-piece structure;
wherein the skin element (12) has an inner surface (14) and an outer surface (16);
a support structure (20) having at least one support element (22);
wherein the at least one support element (22) is bonded to the inner surface (14) of the skin element (12) via a connecting zone (15) that at least partially extends across the inner surface (14) of the skin element (12);
wherein the outer surface (16) of the skin element (12) defines a surface region (17) opposite to the connecting zone (15) where the outer surface (16) is closed, wherein the outer surface (16) of the skin element (12) is an entirely closed surface.

2. Leading edge device (10) of claim 1,
wherein the leading edge device (10) is configured to be movably coupled to a wing structure (121) of an aircraft (1).

3. Leading edge device (10) according to any one of the preceding claims,
wherein the skin element (12) is an integrally formed curved structure.

4. Leading edge device (10) according to any one of the preceding claims,
wherein the skin element (12) comprises a reinforced thermoplastic material; and/or
wherein the skin element (12) comprises a thermoset material; and/or wherein the skin element (12) comprises a metallic material.

5. Leading edge device (10) according to any one of the preceding claims,
wherein the at least one support element (22) comprises a reinforced thermoplastic material; and/or
wherein the at least one support element (22) comprises a thermoset material; and/or
wherein the at least one support element (22) comprises a metallic material.

6. Leading edge device (10) according to any one of the preceding claims,
wherein the skin element (12) and the at least one support element (22) are made of the same material.

7. Leading edge device (10) according to any one of the preceding claims,
wherein the at least one support element (22) is bonded to the inner surface (14) of the skin element (12) by an adhesive bond (30) or by a material bond (30).

8. Leading edge device (10) according to any one of the preceding claims,
wherein the skin element (12) comprises an end (13a) where the inner surface (14) and the outer surface (16) taper towards each other.

9. Leading edge device (10) according to any one of the preceding claims,
wherein the aerodynamic profile of the skin element (12) defines a chordwise direction (101) and a spanwise direction (102) which is substantially perpendicular to the chordwise direction (101);
wherein a first connecting zone (15) via which the at least one support element (22) is bonded to the inner surface (14) of the skin element (12) substantially extends in the chordwise direction (101) or in the spanwise direction (102).

10. Leading edge device (10) according to any one of the preceding claims,
wherein the support structure (20) has a plurality of support elements (22a, 22b);
wherein each of the plurality of support elements (22a, 22b) is bonded to the inner surface (14) of the skin element (12) via respective connecting zones (15a, 15b) that at least partially extend across the inner surface (14) of the skin element (12);
wherein the outer surface (16) of the skin element (12) defines a plurality of surface regions (17), each of which is opposite to one of the respective connecting zones (15a, 15b);
wherein, in the surface regions (17), the outer surface (12) is closed.

11. Leading edge device (10) according to claim 10,
wherein a first support element (22a) of the plurality of support elements (22) is a spanwise stiffening element (22a) which extends in a spanwise direction (102) of the aerodynamic profile of the skin element (12); and/or
wherein a second support element (22b) of the plurality of support elements (22) is a chordwise stiffening element (22b) which extends in a chordwise direction (101) of the aerodynamic profile of the skin element (12).

12. Aircraft (1) comprising a leading edge device (10) according to any one of the preceding claims.

13. Use of a leading edge device (10) according to any one of claims 1 to 11 as a leading-edge slat (110) of an aircraft wing (120).

14. Method for manufacturing a leading edge device (10) for an aerodynamic component (100), comprising:
manufacturing a skin element (12) as a single-piece structure, the skin element (12) having an inner surface (14) and an outer surface (16, S1);
manufacturing a support structure (20) having at least one support element (22, S2);
bonding the at least one support element (22) to the inner surface (14) of the skin element (12) via a connecting zone (15) that at least partially extends across the inner surface (14) of the skin element (12), wherein bonding the at least one support element (22) to the inner surface (14) of the skin element (12) includes bonding the at least one support element (22) to the inner surface (14) of the skin element (12) such that, in a surface region (17) of the outer surface (16) that is opposite to the connecting zone (15), the outer surface (16) remains closed (S3), wherein the outer surface (16) of the skin element (12) is an entirely closed surface.
